# EUROPÄISCHE PATENTSCHRIFT

(11) **EP 3 444 097 B1**
(45) Veröffentlichungstag und Bekanntmachung des Hinweises auf die Patenterteilung: **12.07.2023**
(21) Anmeldenummer: 18188381.0
(22) Anmeldetag: 10.08.2018
(51) Int. Cl.: B29C 48/36, B29B 7/32, B29C 48/87, B29C 48/09, B29C 48/21, B29C 48/82, B29C 48/88, B29C 48/32, B29K 23/00

(54) **VERFAHREN ZUR HERSTELLUNG EINES ROHRS**
METHOD FOR THE MANUFACTURE OF A TUBE
PROCÉDÉ DE FABRICATION D'UN TUYAU

(30) Priorität: 16.08.2017 EP 17186501
(43) Veröffentlichungstag der Anmeldung: 20.02.2019
(73) Patentinhaber: Promix Solutions AG, 8406 Winterthur (CH)
(72) Erfinder: Heusser, Rolf, 8400 Winterthur (CH)
(74) Vertreter: Herrmann, Johanna

(56) Entgegenhaltungen:
- EP-A1- 2 851 118
- EP-A1- 3 100 843
- JP-A- S 538 668
- US-A- 4 454 087
- US-A- 4 615 664
- SCHNEIDER G: "LES MELANGEURS STATIQUES DANS LA TRANSFORMATION DES MATIERES THERMODURCISSABLES ET THERMOPLASTIQUES", REVUE TECHNIQUE SULZER, SULZER FRERES S.A. WINTERTHUR, CH, Bd. 70, Nr. 4, 1. Januar 1988 (1988-01-01) , Seiten 31-36, XP000023729,

## Beschreibung

Die Erfindung betrifft Verfahren zur Herstellung eines Rohrs. Insbesondere betrifft die Erfindung ein Verfahren zur Herstellung eines dickwandigen Rohrs, welches einen Kunststoff enthält. Unter einem dickwandigen Rohr soll nachfolgend ein Rohr verstanden werden, dessen Wandstärke mindestens 3 mm beträgt. Insbesondere betrifft die Erfindung ein Verfahren zur Herstellung eines Rohrs mit einer geringen Dickentoleranz.

Bei der Herstellung von dickwandigen Rohren besteht eine Herausforderung darin die Rohre mit enger Dickentoleranz herzustellen. Da bei dickwandigen Rohren die Kühlzeit sehr lange ist, erfolgt beim Kühlprozess ein durch die auf das dickwandige Rohr wirkende Schwerkraft verursachtes Fliessen des Kunststoffs, zumeist eines Polymers. Wenn die Längsachse des Rohrs in horizontaler Richtung verläuft, erfolgt das Fliessen des noch fluiden Kunststoffs vom oberen Bereich des Rohres in den unteren Bereich. Da das Fliessen des Kunststoffs einen Stofftransport umfasst, führt das Fliessen zu unterschiedlichen Dicken in Umfangsrichtung des Rohrs. Beispielsweise kann das Rohr an seiner Unterseite eine grössere Dicke aufweisen als auf der Oberseite. Dieser Effekt wird nachfolgend als Saggingeffekt bezeichnet. Dieser Saggingeffekt tritt umso stärker in Erscheinung je dicker die Rohrwandung, je grösser der Rohrdurchmesser und je geringer die Viskosität die Schmelze ist.

Im Dokument CH 399729 A ist ein Verfahren und eine Einrichtung zur Herstellung von Rohren aus thermoplastischem Werkstoff beschrieben. Ein formgebendes Werkzeug zur Herstellung eines derartigen Rohrs, welches als ein sich selbst tragendes, längliches, hohles Gebilde definiert ist, enthält einen Düsenkopf und eine an diesem Düsenkopf angebrachte, erwärmte Matrize. Die erwärmte Matrize besitzt einen Auslass, der im Wesentlichen die äussere Oberfläche des Rohres bestimmt. Ein Dorn, der axial innerhalb des Düsenkopfs der Matrize angeordnet ist, bestimmt im Wesentlichen die innere Oberfläche des Rohres. Der Dorn wird von der Polymerschmelze umströmt. Der Dorn umfasst einen erwärmten Teil und einen gekühlten Teil. Um den gekühlten Teil des Dorns bildet sich innerhalb der Matrize eine dünne elastische Haut aus festem Polymer, welche ein einfacheres Abziehen des Rohrs ermöglicht, insbesondere, wenn die sich ausserhalb der Haut befindliche Polymermasse noch flüssig ist und in diesem Zustand auf der Oberfläche des Dorns haften bleiben könnte. Hierdurch wird die Oberflächenqualität der Rohrinnenwand beeinträchtigt, was durch den gekühlten Dorn vermieden werden kann. Um ein Rohr gleichmässiger Dicke herzustellen, wird das Rohr nach dem Austritt aus der Matrize über ein Walzwerk geführt. Das Walzwerk umfasst eine Mehrzahl von Walzen, mittels welchen die Rohrwand gegen einen Innenkörper, beispielsweise einen Konus gepresst wird. Die Walzen haben einen definierten Abstand vom Innenkörper, sodass die Dicke des Rohrs exakt vorgegeben werden kann.

Die CH 399729 A zeigt somit einen heiz- und kühlbaren Dorn als Beispiel für eine Heiz- und Kühlvorrichtung im formgebenden Werkzeug zur Herstellung von Rohren mit dem Ziel, Oberflächenqualität auf der Innenseite des Rohres zu verbessern. Weil der Ringkanal keinerlei Mischelemente enthält, kann die Polymerschmelze nicht homogenisiert werden, sodass hierzu beispielsweise eine Vorrichtung gemäss EP3100843 A1 eingesetzt werden kann. Zudem ist die fühlbare Oberfläche des Dorns bzw. des Mantels, welcher den Dorn umgibt um den Ringkanal auszubilden, im Verhältnis zum Durchflusskanal sehr klein. Daher ist diese Vorrichtung zum Verhindern des Saggingeffekts nicht geeignet, da bedingt durch die limitierte kühlbare Oberfläche nur begrenzt gekühlt werden kann, die Wärmeübertragung in der Kunststoffschmelze gering ist und die Einrichtung zudem bedingt durch die fehlende Mischwirkung bei grosser Kühlleistung zum ungleichmässigen Durchfliessen, Einfrieren oder sogar zur Zersetzung der Kunststoffschmelze neigt. Die Vorrichtung der EP3100843 A1 wird zur Herstellung von dünnwandigen Schläuchen, beispielsweise Folien, verwendet, bei welchen mangels entsprechender Wandstärke ein Saggingeffekt nicht möglich ist. Zudem kommen für diese Folien niederdichte Kunststoffschäume zum Einsatz, deren physikalische Eigenschaften mit den für die dickwandigen Rohre verwendeten hochviskosen Kunststoffschmelzen nicht vergleichbar sind.

Heute werden zur Herstellung von dickwandigen Rohren üblicherweise spezielle, sehr hochviskose Polymere eingesetzt, die dadurch naturgemäss geringe Tendenz eines Saggingeffekts aufweisen. Trotz dieser hochviskosen Polymere kann der Saggingeffekt aber nicht ganz vermieden werden. Auch wird versucht, durch einen nicht zentrischen Werkzeugaustrittsspalt dem Saggingeffekt entgegenzuwirken und ihn so zu kompensieren. Eine solche Korrektur ist aber nur für einen einzigen Prozesspunkt optimal möglich. Das heisst bei einer veränderten Temperatur, Durchsatzmenge oder einem anderen Polymer oder Rohrdurchmesser ist nach wie vor mit einem Saggingeffekt zu rechnen bzw. ist das Werkzeug bei Änderung nur eines dieser Parameter neu einzustellen, was Stillstandszeiten zur Folge hat, die zu erhöhten Kosten führen.

Auch wird gegenwärtig versucht die Schmelze durch entsprechende Extrudereinstellungen im Extruderauslass möglichst in möglichst kaltem Zustand zu halten um eine möglichst schnelle Erstarrung zu erreichen, sodass es aufgrund der schnellen Auskühlung zu keinem Saggingeffekt kommen kann. Auch dieses Verfahren kommt an seine prozesstechnischen Grenzen, da die sehr hochviskosen Polymere einen hohen Druck im Extruder aufbauen. Da dadurch Friktionswärme im Extruder entsteht, kann die Schmelze nicht beliebig abgekühlt werden.

Auch wurde bereits versucht, zwischen Extruder und formgebendem Werkzeug einen statischen Mischer einzubauen. In der Literatur wurde ein Lochblech, wie es in der CH 399729 A gezeigt ist, als statischer Mischer angesehen. Allerdings hat dieses Lochblech für die Kunststoffschmelze nicht die Funktion eines statischen Mischers, insbesondere wenn es sich um eine viskose Kunststoffschmelze handelt. Die Kunststoffschmelze fliesst zwar durch die Löcher, wird aber unmittelbar stromabwärts der Löcher wieder zusammengeführt, ohne dass es zu einer Umlagerung oder Ablenkung der Stränge der Kunststoffschmelze kommt, welche die Löcher des Lochblechs verlassen. Daher hat das Lochblech für die vorliegende Anwendung keine Funktion als statischer Mischer. Ein weiterer Nachteil eines Lochblechs besteht darin, dass das Lochblech bedingt durch den zusätzlichen Druckverlust eine zusätzliche Erwärmung der Kunststoffschmelze erzeugt, was den Saggingeffekt wiederum begünstigt. Auch eine Aussenkühlung des Mischers durch Öl in einem auf dem Mischergehäuse angebrachten Doppelmantel bringt keine genügende Kühlung der Kunststoffschmelze, da die Kühloberfläche im Verhältnis zum Durchsatz sehr klein ist. Es wurde auch versucht, statische Kühler zwischen Extruder und formgebenden Werkzeug einzubauen, um die Kunststoffschmelze nach dem Extruder weiter abzukühlen, wie beispielsweise Plattenwärmetauscher oder Rohrbündelwärmetauscher. Der Einsatz von statischen Kühlern ist aber bei diesen sehr viskosen Polymeren problematisch, da sich leicht Ablagerungen bilden und es zu grossen Verweilzeitunterschieden kommt, die zur Degradation der Polymere führen und somit keine gleichmässige Temperaturverteilung in der Kunststoffschmelze erzeugt werden kann. Entsprechend haben diese aufgeführten Massnahmen nicht zu einer befriedigenden Lösung geführt.

Aufgabe der Erfindung ist es, ein Verfahren zur Herstellung eines dickwandigen Rohrs bereitzustellen, mittels welchem das Rohr in der gewünschten Dicke mit geringer Dickentoleranz bereits am Düsenaustritt erhalten wird.

Die Lösung der Aufgabe der Erfindung erfolgt durch ein Verfahren gemäss Anspruch 1. Vorteilhafte Varianten des Verfahrens sind Gegenstand der Ansprüche 2 bis 12.

Ein Verfahren zur Herstellung eines Rohrs enthaltend einen Kunststoff umfasst die nachfolgenden Verfahrensschritte. Der Kunststoff wird in einem Extruder aufgeschmolzen, sodass eine Kunststoffschmelze erhalten wird. Der Extruder enthält einen Kanal, in welchem eine Fördervorrichtung, beispielsweise eine Extruderschnecke, angeordnet ist, wobei der Kanal ein erstes Ende aufweist. Der Kunststoff wird stromabwärts des ersten Endes in den Kanal eingebracht. Der Kunststoff wird durch den Kanal gefördert und in eine Kunststoffschmelze umgewandelt. Der Kanal weist ein zweites Ende auf. Die Kunststoffschmelze wird durch den Kanal in ein formgebendes Werkzeug geleitet, wobei mittels des formgebenden Werkzeugs das Rohr herstellt wird, wobei das Rohr den Kanal am zweiten Ende verlässt. Der Kanal enthält im formgebenden Werkzeug einen Dorn, sodass die Kunststoffschmelze vom Kanal in einen im formgebenden Werkzeug angeordneten Ringkanal fliesst, wobei der Ringkanal um den Dorn angeordnet ist. Die Kunststoffschmelze durch eine Kühlvorrichtung geführt. Die Kühlvorrichtung enthält ein Kühlelement und ein Mischelement, das im Innenraum des Kanals angeordnet ist, wobei die Kunststoffschmelze das Kühlelement und das Mischelement umströmt, sodass die Kunststoffschmelze durch das Kühlelement gekühlt wird und die Kunststoffschmelze durch das Mischelement gemischt wird. Das Kühlelement ist zumindest teilweise innerhalb des Mischelements angeordnet.

Die Kühlung kann insbesondere durch ein Kühlelement, das in einem Winkel ungleich 90 Grad oder nicht parallel zur Richtung der Durchflussströmung angebracht ist, erfolgen. Wenn eine Mehrzahl von Kühlelementen vorgesehen ist, kann zumindest ein Teil der Kühlelemente nicht parallel zueinander angeordnet werden. Durch das oder die Kühlelemente kann die Kunststoffschmelze im Rohr abgelenkt werden und durch das Kühlelement umgelagert werden. Zumindest ein Teil der Kühlelemente können als Mischelemente ausgebildet sein.

Nach einem Ausführungsbeispiel enthält die Kühlvorrichtung einen statischen Mischer oder ist als statischer Mischer ausgebildet, wobei der statische Mischer das Kühlelement oder die Kühlelemente und das Mischelement oder die Mischelemente enthält. Die Kunststoffschmelze wird durch das Kühlelement homogenisiert. Unter einer homogenisierten Kunststoffschmelze wird eine Kunststoffschmelze verstanden, deren Temperatur im Wesentlichen in Bezug auf eine normal zur Fliessrichtung angeordnete Querschnittsfläche konstant ist. Unter einer im Wesentlichen konstanten Temperatur ist zu verstehen, dass die maximale Temperatur der Kunststoffschmelze sich von der minimalen Temperatur der Kunststoffschmelze sich stromabwärts der Kühlvorrichtung um nicht mehr als 10 Grad unterscheidet, vorzugsweise um nicht mehr als 5 Grad unterscheidet.

Insbesondere unterscheidet sich die maximale Temperatur der Kunststoffschmelze von der minimalen Temperatur der Kunststoffschmelze am zweiten Ende des Kanals um nicht mehr als 10 Grad Celsius, vorzugsweise um nicht mehr als 5 Grad Celsius. Durch diese enge Bandbreite des Temperaturbereichs sind die Fliesseigenschaften der Kunststoffschmelze im Kernbereich der Strömung und im Wandbereich derselben im Wesentlichen gleich. Die Kunststoffschmelze ist somit stromabwärts der Kühlvorrichtung über den Fliessquerschnitt homogenisiert.

Das Kühlelement befindet sich somit in der Kunststoffschmelzeströmung. Die Kunststoffschmelze wird somit nicht nur an der Innenwand des Aussenrohrs bzw. an der Aussenwand des Innenrohrs gekühlt, sondern auch im Strömungskern.

Das Mischelement oder das Kühlelement kann eine Mehrzahl von Stegelementen umfassen, welche kreuzweise zueinander angeordnet sein können. Zumindest ein Teil der Stegelemente kann einen Kühlkanal enthalten. Der Kühlkanal ist ein bevorzugtes Ausführungsbeispiel für ein Kühlelement. Der Kühlkanal kann von einem Kühlfluid durchströmt werden, sodass die Wärme von der Kunststoffschmelze auf das Kühlfluid übertragen wird. Die Fliessgeschwindigkeit und/oder die Eintrittstemperatur des Kühlfluids in den Kühlkanal kann variabel sein, sodass die Kühlleistung des Kühlelements durch Anpassung der Fliessgeschwindigkeit und/oder der Eintrittstemperatur des Kühlfluids anpassbar ist.

Das Rohr wird stromabwärts des zweiten Endes abgekühlt, das heisst, nach dem Austritt aus dem formgebenden Werkzeug. Da die Kunststoffschmelze durch Verwendung der Kühlvorrichtung bereits soweit abgekühlt ist, sind Fliessvorgänge im Rohrquerschnitt bedingt durch die Einwirkung der Schwerkraft nicht mehr möglich oder zumindest stark reduziert. Daher kann das Rohr in jeder beliebigen Ausrichtung abgekühlt werden, ohne dass die Ausrichtung des Rohrs auf den Rohrquerschnittsverlauf nennenswerte Auswirkungen hat. Das heisst, die Rohrmittenachse kann sich in beliebiger Raumrichtung erstrecken, sie kann beispielsweise horizontal verlaufen, wie in der CH399729 A gezeigt, oder in einem Neigungswinkel zur Horizontalebene, was beispielsweise in der DE 2650911 A1 gezeigt ist.

Das Rohr kann insbesondere einen Aussendurchmesser von mindestens 100 mm aufweisen. Das Rohr weist eine Wandstärke von mindestens 20 mm auf. Das Rohr kann insbesondere einen Aussendurchmesser von mindestens 200 mm aufweisen. Für ein dickwandiges Rohr mit einer Wandstärke von mindestens 20 mm und einem Aussendurchmesser von mindestens 200 mm ist die Kühlung der Kunststoffschmelze durch ein Kühlelement, welches geeignet ist, den Strömungskern zu kühlen, und die Strömung des Strömungskerns mit der Strömung der Wandschichten zu mischen, besonders vorteilhaft. Durch die gleichzeitige Kühlung und Mischung entspricht die Temperatur des Strömungskerns im Wesentlichen der Temperatur der Wandschicht der Strömung. Der Wärmeübergang zwischen Kühlelement und Kunststoffschmelze ist überraschenderweise um mindestens 50% höher als für einen Kühler der nur eine Kühlung der Kunststoffschmelze über den Kanalmantel ermöglicht. Diese überraschende Erhöhung des Wärmeübergangs im Vergleich zu den Vorrichtungen aus dem Stand der Technik ist bedingt durch die effiziente Erneuerung der Grenzschichten durch die Kühlelemente gemäss einem der vorhergehenden Ausführungsbeispiele.

Nach einem Ausführungsbeispiel weist das Rohr eine Wandstärke von mindestens 40 mm auf. Das Rohr kann insbesondere einen Aussendurchmesser von mindestens 400 mm aufweisen.

Nach einem Ausführungsbeispiel kann die Fördervorrichtung beispielsweise einen Kolben oder eine Extruderschnecke enthalten. Der Extruder kann insbesondere als Einschneckenextruder ausgebildet sein. Jedes der Bauelemente, wie insbesondere die Fördervorrichtung, Kühlvorrichtung und das formgebende Werkzeug, kann in einer Linie angeordnet sein. Alle Bauelemente oder zumindest zwei der Bauelemente können eine gemeinsame Längsachse aufweisen, die als Gerade ausgebildet ist. Es ist auch möglich, jedes der Bauelemente in einem Winkel zueinander, das heisst, in einem Winkel zu einem der benachbarten Bauelemente anzuordnen, der insbesondere ungleich 180 Grad beträgt. Insbesondere kann jedes der Bauelemente durch ein Bogenelement mit dem benachbarten Bauelement verbunden sein. An das zweite Ende kann eine Kühlstrecke anschliessen. Die Kühlstrecke kann eine Länge von bis zu 100 m, für besonders dickwandige Rohre eine Länge von bis zu 200 m aufweisen. Die Kühlstrecke kann insbesondere bahnförmig ausgebildet sein. Nach einem Ausführungsbeispiel kann die Bahn einen geraden Verlauf aufweisen, sodass ein gerades dickwandiges Rohr beliebiger Länge erhältlich ist.

Der Kanal kann einen ersten Kanalabschnitt enthalten, der die Fördervorrichtung enthält. Der Kanal kann einen zweiten Kanalabschnitt enthalten, der an den ersten Kanalabschnitt anschliesst. Der Kanal kann einen dritten Kanalabschnitt enthalten, der an den zweiten Kanalabschnitt anschliesst. Insbesondere kann der dritte Kanalabschnitt das formgebende Werkzeug enthalten.

Die Kunststoffschmelze passiert gemäss einem Ausführungsbeispiel im zweiten Kanalabschnitt die Kühlvorrichtung, die Kühlvorrichtung ist gemäss diesem Ausführungsbeispiel im zweiten Kanalabschnitt angeordnet. Eine Kühlvorrichtung kann auch in jedem der anderen Kanalabschnitte vorgesehen sein.

Der Kunststoff kann zumindest ein Element aus der Gruppe der Polyethylene oder Polypropylene enthalten. Insbesondere kann der Anteil an Polyethylen oder Polypropylen mindestens 50 Gew. % betragen.

Nach einem Ausführungsbeispiel ist die Kühlvorrichtung stromaufwärts des formgebenden Werkzeugs angeordnet. Nach einem Ausführungsbeispiel ist die Kühlvorrichtung stromabwärts des Extruders angeordnet. Nach einem Ausführungsbeispiel ist die Kühlvorrichtung zwischen dem Extruder und dem formgebenden Werkzeug angeordnet.

Die Erfindung betrifft eine Vorrichtung zur Herstellung eines Rohrs enthaltend einen Kunststoff, einen Extruder, wobei der Extruder eine Fördervorrichtung, beispielsweise eine Extruderschnecke oder einen Kolben, enthält, die in einem Kanal angeordnet ist. Der Kanal weist ein erstes Ende auf, wobei der Kanal den Kunststoff stromabwärts des ersten Endes enthält. Der Kanal ist über eine Zufuhrleitung mit einem Kunststoffvorratsbehälter verbunden. Der Kunststoff kann im Vorratsbehälter in fester Form, beispielsweise als Pulver oder in der Form von Pellets gelagert werden. Über die Zufuhrleitung wird der Kunststoff in den Kanal eingespeist. Der Kanal enthält eine Wärmeeintragsvorrichtung oder ist mit einer Wärmeeintragsvorrichtung verbunden, sodass der Kunststoff im Kanal zu einer Kunststoffschmelze umwandelbar ist. Der Kanal weist ein zweites Ende auf, sodass der Kanal eine Verbindung für die Kunststoffschmelze vom Extruder zu einem formgebenden Werkzeug ausbildet. Das formgebende Werkzeug enthält einen Ringkanal zur Herstellung des Rohrs aus der Kunststoffschmelze, wobei sich der Ringkanal bis zum zweiten Ende erstreckt. Das zweite Ende enthält eine Öffnung zum Austritt der Kunststoffschmelze aus dem formgebenden Werkzeug. Stromaufwärts des formgebenden Werkzeugs oder im Bereich des formgebenden Werkzeugs ist eine Kühlvorrichtung im Kanal angeordnet, wobei die Kühlvorrichtung ein Kühlelement und ein Mischelement enthält, das im Innenraum des Kanals angeordnet ist, sodass das Kühlelement und das Mischelement im Betriebszustand von der Kunststoffschmelze umströmt werden kann, sodass eine Mischung und eine Homogenisierung der Kunststoffschmelze durch das Kühlelement und das Mischelement erfolgen kann. Nach einem Ausführungsbeispiel kann das formgebende Werkzeug eine Kühlvorrichtung enthalten. Stromabwärts des zweiten Endes kann das Rohr entlang einer bahnförmigen Kühlstrecke weiter abgekühlt werden. Für ein dickwandiges Rohr ist hierfür eine lange Kühldauer erforderlich. Daher kann die Kühlstrecke eine Länge von bis zu 100 m, für dickwandigere Rohre auch bis zu 200 m aufweisen.

Damit das Kühlelement und das Mischelement von der Kunststoffschmelze umströmt werden kann, ist es derart angeordnet, dass es in die Kernströmung der Kunststoffschmelze ragt. Zusätzlich kann das Kühlelement oder das Mischelement auch derart konfiguriert sein, dass die Wandströmung durch das Kühlelement oder das Mischelement gekühlt werden kann. Insbesondere kann das Kühlelement oder das Mischelement ein Leitelement enthalten, um die Wandströmung mit der Kernströmung zu vermischen.

Nach einem Ausführungsbeispiel weist der Kanal einen ersten Kanalabschnitt auf, der die Fördervorrichtung enthält. Der Kanal weist nach einem Ausführungsbeispiel einen zweiten Kanalabschnitt auf, der an den ersten Kanalabschnitt anschliesst. Der Kanal weist einen dritten Kanalabschnitt auf, der an den zweiten Kanalabschnitt anschliesst. Nach einem Ausführungsbeispiel enthält der dritte Kanalabschnitt das formgebende Werkzeug. Insbesondere kann die Kühlvorrichtung im zweiten Kanalabschnitt angeordnet sein. Nach einem Ausführungsbeispiel können eine Mehrzahl von Kühlvorrichtungen vorgesehen sein. Die Kühlvorrichtungen können in paralleler Anordnung oder in serieller Anordnung angeordnet sein.

Nach einem Ausführungsbeispiel kann die Kühlvorrichtung einen statischen Mischer enthalten oder als statischer Mischer ausgebildet sein. Insbesondere kann das Kühlelement zumindest teilweise als Mischelement ausgebildet sein. Eine Mehrzahl von Kühlelementen kann vorgesehen sein. Das Kühlelement kann als Stegelement ausgebildet sein. Das Kühlelement oder zumindest ein Teil der Kühlelemente kann einen Kanal enthalten, der im Betriebszustand von einem Kühlfluid durchströmt wird.

Nach einem Ausführungsbeispiel kann das Rohr eine Mehrzahl von Schichten enthalten. Die Schichten können verschiedene Kunststoffe enthalten, zumindest ein Teil der Schichten kann auch ein Material enthalten, welches nicht der Gruppe der Kunststoffe zuzuordnen ist. Insbesondere kann jede der Schichten in einem eigenen Extruder hergestellt werden. Für jede der Schichten kann je ein Kanal vorgesehen werden, mittels welchem die Schicht zum formgebenden Werkzeug transportiert wird. Insbesondere können die Kanäle der Schichten ins formgebende Werkzeug geführt werden. Gemäss einem Ausführungsbeispiel kann eine Mehrzahl von Ringkanälen im formgebenden Werkzeug vorgesehen sein. Die Ringkanäle können stromaufwärts des zweiten Endes zu einem einzigen Ringkanal zusammengeführt werden. Das formgebende Werkzeug kann ein Düsenelement enthalten, insbesondere eine Ringdüse. Nach einem Ausführungsbeispiel kann der Extruder als Einschneckenextruder ausgebildet sein.

Das Verfahren sowie die zugehörige Vorrichtung findet vorzugsweise Verwendung für die Herstellung eines dickwandigen Rohrs nach einem der vorgehend beschriebenen Ausführungsbeispiele.

Nachfolgend wird das erfindungsgemässe Verfahren sowie die Vorrichtung anhand einiger Ausführungsbeispiele dargestellt. Es zeigen
Fig. 1 eine Vorrichtung zur Durchführung des Verfahrens nach einem ersten Ausführungsbeispiel,
Fig. 2 eine Vorrichtung zur Durchführung des Verfahrens nach einem zweiten Ausführungsbeispiel.

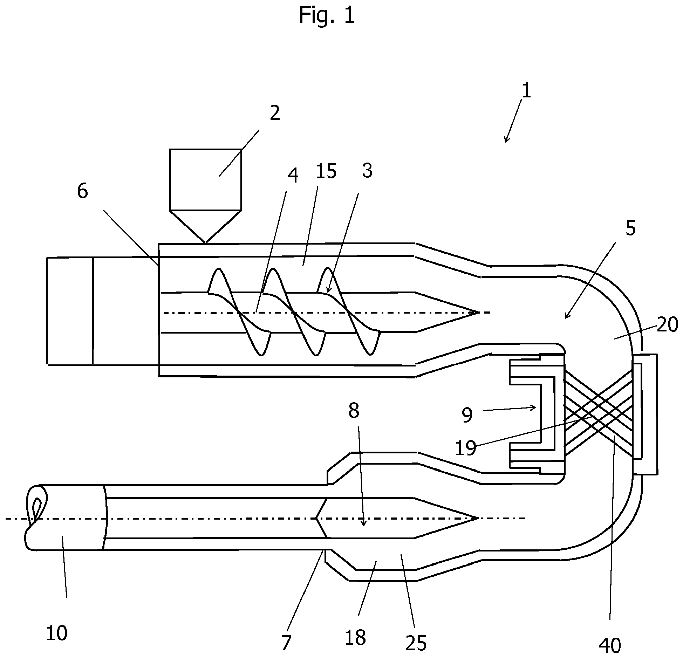

Fig. 1 zeigt eine Vorrichtung 1 zur Herstellung eines Rohrs 10 aus Kunststoff, umfassend einen Kunststoffbehälter 2 zur Aufnahme des Kunststoffs, einen Extruder 3, wobei der Extruder 3 eine Fördervorrichtung 4, beispielsweise eine Extruderschnecke oder einen Kolben, enthält, die in einem Kanal 5 angeordnet ist. Der Kanal 5 weist ein erstes Ende 6 auf, wobei der Kunststoff stromabwärts des ersten Endes 6 im Kanal 5 enthalten ist. Der Kunststoffbehälter 2 ist über eine Zufuhrleitung mit dem Kanal 5 verbindbar oder verbunden. Es können mehrere Kunststoffbehälter 2 für verschiedene Kunststoffe vorgesehen sein. Auch Behälter für Additive, Treibmittel oder dergleichen können gegebenenfalls vorgesehen sein. Der Kanal 5 enthält eine Wärmeeintragsvorrichtung, sodass der Kunststoff im Kanal 5 zu einer Kunststoffschmelze umwandelbar ist. Die Wärmeeintragsvorrichtung kann eine Heizvorrichtung umfassen, die zeichnerisch nicht dargestellt ist. Die Extruderschnecke kann als Wärmeeintragsvorrichtung ausgebildet sein oder eine Wärmeeintragsvorrichtung enthalten.

Der Kanal 5 weist ein zweites Ende 7 auf, wobei der Kanal 5 eine Verbindung für die Kunststoffschmelze vom Extruder 3 zu einem formgebenden Werkzeug 8 ausbildet. Das formgebende Werkzeug 8 enthält einen Ringkanal 18 zur Herstellung des Rohrs 10 aus der Kunststoffschmelze. Der Ringkanal 18 erstreckt sich bis zum zweiten Ende 7, wobei das zweite Ende 7 eine Öffnung zum Austritt der Kunststoffschmelze aus dem formgebenden Werkzeug 8 enthält. Stromaufwärts des formgebenden Werkzeugs 8 ist eine Kühlvorrichtung 9 im Kanal 5 angeordnet, wobei die Kühlvorrichtung 9 ein Kühlelement 19 und ein Mischelement 40 enthält, das im Innenraum des Kanals 5 angeordnet ist, sodass das Kühlelement 19 und das Mischelement 40 im Betriebszustand von der Kunststoffschmelze umströmt werden kann, sodass eine Mischung der Kunststoffschmelze durch das Mischelement 40 und eine Kühlung der Kunststoffschmelze durch das Kühlelement 19 erfolgen kann. Nach einem Ausführungsbeispiel weist das Rohr 10 einen Aussendurchmesser von mindestens 100 mm auf. Das Rohr 10 kann eine Wandstärke von mindestens 3 mm aufweisen. Nach einem Ausführungsbeispiel weist das Rohr 10 einen Aussendurchmesser von mindestens 200 mm auf. Das Rohr 10 kann eine Wandstärke von mindestens 20 mm aufweisen. Damit das Kühlelement 19 und das Mischelement 40 von der Kunststoffschmelze umströmt werden kann, ist es derart angeordnet, dass es zumindest teilweise in die Kernströmung der Kunststoffschmelze ragt. Zusätzlich kann das Kühlelement 19 und das Mischelement 40 auch derart konfiguriert sein, dass die Wandströmung durch das Kühlelement 19 gekühlt werden kann. Insbesondere kann das Mischelement 40 ein Leitelement enthalten, um die Wandströmung mit der Kernströmung zu vermischen.

Nach einem Ausführungsbeispiel weist der Kanal 5 einen ersten Kanalabschnitt 15 auf, der die Fördervorrichtung 4 enthält. Der Kanal 5 weist einen zweiten Kanalabschnitt 20 auf, der an den ersten Kanalabschnitt 15 anschliesst. Der Kanal 5 weist einen dritten Kanalabschnitt 25 auf, der an den zweiten Kanalabschnitt 20 anschliesst, wobei der dritte Kanalabschnitt 25 das formgebende Werkzeug 8 enthält. Insbesondere kann die Kühlvorrichtung 9 im zweiten Kanalabschnitt 20 angeordnet sein. Nach einem Ausführungsbeispiel können eine Mehrzahl von Kühlvorrichtungen 9 vorgesehen sein. Die Kühlvorrichtungen 9 können in paralleler Anordnung oder in serieller Anordnung angeordnet sein, was zeichnerisch nicht in Fig. 1 dargestellt ist.

Die Kühlvorrichtung 9 kann einen statischen Mischer enthalten oder als statischer Mischer ausgebildet sein. Insbesondere kann das Kühlelement 19 zumindest teilweise als das Mischelement 40 ausgebildet sein. Das Kühlelement 19 und das Mischelement 40 können eine Einheit ausbilden. Eine Mehrzahl von Kühlelementen 19 oder Mischelementen 40 kann vorgesehen sein. Das Kühlelement 19 oder das Mischelement 40 kann als Stegelement ausgebildet sein. Das Kühlelement 19 oder zumindest ein Teil der Kühlelemente kann einen Kanal enthalten, der von einem Kühlfluid durchströmt wird.

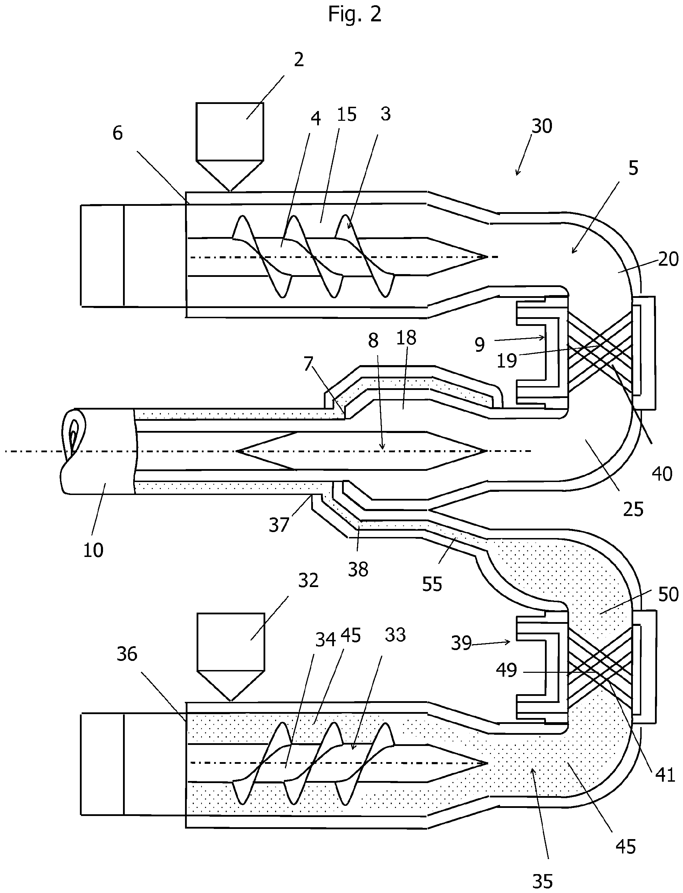

Gemäss dem in Fig. 2 dargestellten Ausführungsbeispiel einer Vorrichtung 30 kann das Rohr 10 eine Mehrzahl von Schichten enthalten. Fig. 2 zeigt eine Vorrichtung 30 zur Herstellung eines Rohrs 10 aus Kunststoff, umfassend einen Kunststoffbehälter 2, 32 zur Aufnahme des Kunststoffs, einen ersten und einen zweiten Extruder 3, 33. Der erste und zweite Extruder 3, 33 enthalten je eine Fördervorrichtung 4, 34, beispielsweise eine Extruderschnecke oder einen Kolben, die in je einem ersten bzw. zweiten Kanal 5, 35 angeordnet ist. Der erste Kanal 5 weist ein erstes Ende 6 auf, der zweite Kanal 35 weist ein erstes Ende 36 auf, wobei der Kunststoff stromabwärts des entsprechenden ersten Endes 6, 36 im Kanal 5, 35 enthalten ist. Jeder der ersten oder zweiten Kanäle 5, 35 kann eine Wärmeeintragsvorrichtung enthalten, sodass der Kunststoff im entsprechenden Kanal 5, 35 zu einer Kunststoffschmelze umwandelbar ist. Die Wärmeeintragsvorrichtung kann eine Heizvorrichtung umfassen, die zeichnerisch nicht dargestellt ist. Jeder der Kanäle 5, 35 weist je ein zweites Ende 7, 37 auf, wobei der erste Kanal 5 und der zweite Kanal 35 je eine Verbindung für die Kunststoffschmelze vom ersten bzw. zweiten Extruder 3, 33 zu einem formgebenden Werkzeug 8 ausbilden. Das formgebende Werkzeug 8 enthält einen ersten Ringkanal 18 und einen zweiten Ringkanal 38 zur Herstellung des Rohrs 30 aus der Kunststoffschmelze. Der erste Ringkanal 18 erstreckt sich bis zum zweiten Ende 7, wobei das zweite Ende 7 eine Öffnung zum Austritt der Kunststoffschmelze aus dem formgebenden Werkzeug 8 enthält. Der zweite Ringkanal 38 erstreckt sich bis zum zweiten Ende 37, wobei das zweite Ende 37 eine Öffnung zum Austritt der Kunststoffschmelze aus dem formgebenden Werkzeug 8 enthält. Stromaufwärts des formgebenden Werkzeugs 8 ist eine erste Kühlvorrichtung 9 im ersten Kanal 5 angeordnet und eine zweite Kühlvorrichtung 39 im zweiten Kanal 35, wobei die erste Kühlvorrichtung 9 ein erstes Kühlelement 19 und ein erstes Mischelement 40 enthält, das im Innenraum des ersten Kanals 5 angeordnet ist, sodass das erste Kühlelement 19 und das erste Mischelement 40 im Betriebszustand von der Kunststoffschmelze umströmt werden kann, sodass eine Mischung der Kunststoffschmelze durch das erste Mischelement 40 erfolgen kann. Eine zweite Kühlvorrichtung 39 ist im zweiten Kanal 35 angeordnet, wobei die zweite Kühlvorrichtung 39 ein zweites Kühlelement 49 und ein zweites Mischelement 41 enthält, das im Innenraum des zweiten Kanals 35 angeordnet ist, sodass das zweite Mischelement 41 und das zweite Kühlelement 49 im Betriebszustand von der Kunststoffschmelze umströmt werden kann, sodass eine Mischung der Kunststoffschmelze durch das zweite Mischelement 41 erfolgen kann.

Nach einem Ausführungsbeispiel weist das Rohr 30 einen Aussendurchmesser von mindestens 100 mm auf. Das Rohr 30 kann eine Wandstärke von mindestens 3 mm aufweisen. Nach einem Ausführungsbeispiel weist das Rohr 30 einen Aussendurchmesser von mindestens 200 mm auf. Das Rohr 30 kann eine Wandstärke von mindestens 20 mm aufweisen. Damit jedes der ersten oder zweiten Kühlelemente 19, 49 von der Kunststoffschmelze umströmt werden kann, ist es derart angeordnet, dass es in die Kernströmung der Kunststoffschmelze ragt. Zusätzlich kann jedes der ersten oder zweiten Kühlelemente 19, 49 auch derart konfiguriert sein, dass die Wandströmung durch das entsprechende Kühlelement 19, 49 gekühlt werden kann. Insbesondere kann jedes der Mischelemente 40, 41 ein Leitelement enthalten, um die Wandströmung mit der Kernströmung zu vermischen.

Nach einem Ausführungsbeispiel weist der zweite Kanal 35 einen ersten Kanalabschnitt 45 auf, der die Fördervorrichtung 34 enthält. Der zweite Kanal 35 weist einen zweiten Kanalabschnitt 50 auf, der an den ersten Kanalabschnitt 45 anschliesst. Der zweite Kanal 35 weist einen dritten Kanalabschnitt 55 auf, der an den zweiten Kanalabschnitt 50 anschliesst, wobei der dritte Kanalabschnitt 55 das formgebende Werkzeug 8 enthält. Insbesondere kann die Kühlvorrichtung 39 im zweiten Kanalabschnitt 50 angeordnet sein. Nach einem Ausführungsbeispiel können eine Mehrzahl von Kühlvorrichtungen 39 vorgesehen sein. Die Kühlvorrichtungen 39 können in paralleler Anordnung oder in serieller Anordnung angeordnet sein, was zeichnerisch nicht in Fig. 2 dargestellt ist.

Die erste Kühlvorrichtung 9 oder die zweite Kühlvorrichtung 39 können einen statischen Mischer enthalten oder als statischer Mischer ausgebildet sein. Insbesondere kann das zweite Kühlelement 49 zumindest teilweise als Mischelement 41 ausgebildet sein. Eine Mehrzahl von Kühlelementen 49 kann vorgesehen sein. Das Kühlelement 49 oder das Mischelement 41 kann als Stegelement ausgebildet sein. Das oder die Kühlelemente 49 oder zumindest ein Teil der Kühlelemente können einen Kanal enthalten, der im Betriesbszustand von einem Kühlfluid durchströmt wird.

Die Schichten, aus welchen das Rohr 30 besteht, können verschiedene Kunststoffe enthalten, zumindest ein Teil der Schichten kann auch ein Material enthalten, welches nicht der Gruppe der Kunststoffe zuzuordnen ist. Insbesondere kann jede der Schichten in einem eigenen Extruder 3, 33 hergestellt werden. Für jede der Schichten kann je ein Kanal 5, 35 vorgesehen werden, mittels welchem die entsprechende Schicht zum formgebenden Werkzeug 8 transportiert wird. Insbesondere können die Schichten mittels der Kanäle 5, 35 ins formgebende Werkzeug 8 geführt werden. Gemäss einem Ausführungsbeispiel kann eine Mehrzahl von Ringkanälen 18, 38 im formgebenden Werkzeug 8 vorgesehen sein. Die Ringkanäle 18, 38 können stromaufwärts des zweiten Endes 7, 37 zu einem einzigen Ringkanal zusammengeführt werden. Das formgebende Werkzeug 8 kann ein Düsenelement enthalten, insbesondere eine Ringdüse. Nach einem Ausführungsbeispiel kann der Extruder 3, 33 als Einschneckenextruder ausgebildet sein.

Die Stegelemente des ersten oder zweiten Kühlelements 19, 49 oder des ersten oder zweiten Mischelements 40, 41 können nach jedem der Ausführungsbeispiele einer ersten und einer zweiten Stegelementgruppe zugeordnet sein. Die Kühlvorrichtung 9, 39 kann eine erste Gruppe von Stegelementen sowie eine zweite Gruppe von Stegelementen umfassen. Jede Gruppe kann eine Mehrzahl von Stegelementen umfassen. Je nach der Breite der Stegelemente und der Fliesskanalbreite können 1 bis 100, vorzugsweise 1 bis 50 Stegelemente zu einer Gruppe gehören. Die Stegelemente, die zu einer Gruppe gehören, können parallel zueinander angeordnet sein. Die in Richtung der auftreffenden Kunststoffschmelzeströmung ausgerichteten Seitenflächen der Stegelemente spannen nach einem Ausführungsbeispiel eine gemeinsame Ebene auf.

Die Stegelemente der ersten Gruppe kreuzen sich vorzugsweise mit den Stegelementen der zweiten Gruppe. Ein Stegelement der ersten Gruppe schliesst gemäss diesem Ausführungsbeispiel an ein Stegelement der zweiten Gruppe an. Das Stegelement der ersten Gruppe ist somit kreuzweise zum Stegelement der zweiten Gruppe angeordnet. Die Stegelemente der ersten Gruppe wechseln somit mit den Stegelementen der zweiten Gruppe ab. Die ersten und zweiten Gruppen können je eine Ebene aufspannen, die in einem Neigungswinkel von 25 bis 75 Grad zur Hauptfliessrichtung geneigt ist. Insbesondere kann der Winkel 30 bis 60 Grad betragen, in vielen Fällen im Wesentlichen 45 Grad.

Stegelemente können einen oder mehrere Kanäle aufweisen, die von einem Wärmeträgerfluid durchströmt werden. Die Kühlvorrichtung kann einen Sockel oder ein Mantelelement enthalten, der oder das einen Verteilerkanal für die Verteilung eines Wärmeträgerfluids oder einen Sammelkanal für die Zusammenführung des Wärmeträgerfluids von einer Mehrzahl an Ableitungskanälen enthalten kann. Beispielsweise stehen je ein Zuleitungskanal und ein Ableitungskanal mit dem ersten und zweiten Ende des Stegelements in fluidleitender Verbindung. Für jedes der Stegelemente, die Kanäle enthalten, ist mindestens ein Zuleitungskanal vorgesehen, welcher das Wärmeträgerfluid dem entsprechenden Kanal im Stegelement zuführt und ein Ableitungskanal, welcher das Wärmeträgerfluid vom Kanal im Stegelement in einen Sammelkanal leitet. Das Wärmeträgerfluid wird in diesem Fall durch das den Sockel und/oder den Mantel des die Kunststoffschmelze umgebenden Rohrelements zugeführt und/oder abgeführt.

Die in den Stegelementen verlaufenden Kanäle können ovalen oder kreisförmigen Querschnitt aufweisen. Die Kanäle können auch andere Querschnittsflächen aufweisen, beispielsweise mit einer dreieckigen, viereckigen oder mehreckigen, Querschnittsfläche.

Für den Fachmann ist offensichtlich, dass viele weitere Modifikationen zusätzlich zu den beschriebenen Ausführungsbeispielen möglich sind.

Beispielsweise kann ein statischer Mischer gemäss der EP 2851118 B1 zum Einsatz kommen. Der Gegenstand der Erfindung wird somit durch die vorangehende Beschreibung nicht eingeschränkt und ist durch den Schutzbereich bestimmt, der durch die Ansprüche festgelegt ist.

## Patentansprüche

1. Verfahren zur Herstellung eines Rohrs (10) enthaltend einen Kunststoff, wobei der Kunststoff in einem Extruder (3, 33) aufgeschmolzen wird, sodass eine Kunststoffschmelze erhalten wird, wobei der Extruder (3, 33) einen Kanal (5, 35) enthält, im Kanal (5, 35) eine Fördervorrichtung (4, 34) angeordnet ist, wobei der Kanal (5, 35) ein erstes Ende (6, 36) aufweist, wobei der Kunststoff stromabwärts des ersten Endes (6, 36) in den Kanal (5, 35) eingebracht wird, wobei der Kunststoff durch den Kanal (5, 35) gefördert wird und in eine Kunststoffschmelze umgewandelt wird, wobei der Kanal (5, 35) ein zweites Ende (7, 37) aufweist, wobei die Kunststoffschmelze durch den Kanal (5, 35) in ein formgebendes Werkzeug (8) geleitet wird, wobei mittels des formgebenden Werkzeugs (8) das Rohr (10) herstellt wird, wobei das Rohr (10) den Kanal (5, 35) am zweiten Ende (7, 37) verlässt, wobei der Kanal (5, 35) im formgebenden Werkzeug einen Dorn enthält, sodass die Kunststoffschmelze vom Kanal in einen im formgebenden Werkzeug angeordneten Ringkanal fliesst, wobei der Ringkanal um den Dorn angeordnet ist, **dadurch gekennzeichnet, dass** die Kunststoffschmelze durch eine Kühlvorrichtung (9, 39) geführt wird, wobei die Kühlvorrichtung (9, 39) ein Kühlelement (19, 49) und ein Mischelement (40, 41) enthält, das im Innenraum des Kanals (5, 35) angeordnet ist, wobei die Kühlvorrichtung stromaufwärts des formgebenden Werkzeugs (8) angeordnet ist, wobei die Kunststoffschmelze das Kühlelement (19, 49) und das Mischelement (40, 41) umströmt, sodass die Kunststoffschmelze durch das Kühlelement (19, 49) gekühlt wird und die Kunststoffschmelze durch das Mischelement (40, 41) gemischt wird, wobei das Kühlelement (19, 49) zumindest teilweise innerhalb des Mischelements (40, 41) angeordnet ist und wobei das Rohr eine Wandstärke von mindestens 20 mm aufweist.

2. Verfahren nach Anspruch 1, wobei das Mischelement (40, 41) oder das Kühlelement (19, 49) eine Mehrzahl von Stegelementen umfassen, welche kreuzweise zueinander angeordnet sein können.

3. Verfahren nach Anspruch 2, wobei zumindest ein Teil der Stegelemente einen Kühlkanal enthält.

4. Verfahren nach einem der vorhergehenden Ansprüche, wobei das Rohr (10) eine Wandstärke von mindestens 40 mm aufweist.

5. Verfahren nach einem der vorhergehenden Ansprüche, wobei das Rohr (10) einen Aussendurchmesser von mindestens 100 mm aufweist, vorzugsweise mindestens 200 mm, bevorzugt mindestens 400 mm aufweist.

6. Verfahren nach einem der vorhergehenden Ansprüche, wobei sich die maximale Temperatur der Kunststoffschmelze sich von der minimalen Temperatur der Kunststoffschmelze um nicht mehr als 10 Grad unterscheidet, vorzugsweise um nicht mehr als 5 Grad unterscheidet, sodass die Kunststoffschmelze stromabwärts der Kühlvorrichtung (9, 39) über den Fliessquerschnitt homogenisiert ist.

7. Verfahren nach einem der vorhergehenden Ansprüche, wobei die Fördervorrichtung (4, 34) eine Extruderschnecke umfasst, die im Kanal (5, 35) angeordnet ist.

8. Verfahren nach einem der vorhergehenden Ansprüche, wobei der Kanal (5, 35) einen ersten Kanalabschnitt (15, 45) enthält, der die Fördervorrichtung (4, 34) enthält, wobei der Kanal (5, 35) einen zweiten Kanalabschnitt (20, 50) enthält, der an den ersten Kanalabschnitt (15, 45) anschliesst, wobei der Kanal (5, 35) einen dritten Kanalabschnitt (25, 55) enthält, der an den zweiten Kanalabschnitt (20, 50) anschliesst, wobei der dritte Kanalabschnitt (25, 55) das formgebende Werkzeug (8) enthält.

9. Verfahren nach Anspruch 8, wobei die Kühlvorrichtung (9, 39) im zweiten Kanalabschnitt (20, 50) angeordnet ist, sodass die Kunststoffschmelze im zweiten Kanalabschnitt (20, 50) die Kühlvorrichtung (9, 39) passiert.

10. Verfahren nach einem der vorhergehenden Ansprüche, wobei der Kunststoff zumindest ein Element aus der Gruppe bestehend aus Polyethylen oder Polypropylen enthält.

11. Verfahren nach Anspruch 10, wobei der Anteil an Polyethylen oder Polypropylen mindestens 50 Gew% beträgt.

12. Verfahren nach einem der vorhergehenden Ansprüche, wobei die Kühlvorrichtung (9, 39) stromaufwärts des formgebenden Werkzeugs (8) angeordnet ist.

## Claims

1. A method for the manufacture of a tube (10) containing a plastic material, wherein the plastic material is melted in an extruder (3, 33) so that a plastic melt is obtained, wherein the extruder (3, 33) includes a passage (5, 35), wherein a conveyor (4, 34) is arranged in the passage (5, 35), wherein the passage (5, 35) has a first end (6, 36), wherein the plastic material is introduced downstream of the first end (6, 36) into the passage (5, 35), wherein the plastic material is conveyed through the passage (5, 35) and is converted into a plastic melt, wherein the passage (5, 35) has a second end (7, 37), wherein the plastic melt is directed through the passage (5, 35) into a forming tool (8), wherein the tube (10) is produced by means of the forming tool (8), wherein the tube (10) leaves the passage (5, 35) at the second end (7, 37), wherein the passage (5, 35) in the forming tool contains a mandrel, so that the plastic melt flows from the passage into an annular passage arranged in the forming tool, wherein the annular passage is arranged around the mandrel, **characterized in that** the plastic melt is guided through a cooling device (9, 39), wherein the cooling device (9, 39) contains a cooling element (19, 49) and a mixing element (40, 41) which is arranged in the interior of the passage (5, 35), wherein the cooling device is arranged upstream of the forming tool (8), wherein the plastic melt flows around the cooling element (19, 49) and the mixing element (40, 41), so that the plastic melt is cooled by the cooling element (19, 49) and the plastic melt is mixed by the mixing element (40, 41), wherein the cooling element (19, 49) is at least partially is arranged within the mixing element (40, 41) and wherein the tube has a wall thickness of at least 20 mm.

2. The method of claim 1, wherein the mixing element (40, 41) or the cooling element (19, 49) comprise a plurality of web elements which can be arranged crosswise to one another.

3. The method of claim 2, wherein at least a portion of the web elements include a cooling passage.

4. The method of one of the preceding claims, wherein the tube (10) has a wall thickness of at least 40 mm.

5. The method of one of the preceding claims, wherein the tube (10) has an outer diameter of at least 100 mm, preferably at least 200 mm, most preferred at least 400 mm.

6. The method of one of the preceding claims, wherein the maximum temperature of the plastic melt differs from the minimum temperature of the plastic melt by no more than 10 degrees, preferably no more than 5 degrees, so that the plastic melt downstream of the cooling device (9, 39) is homogenized over the flow cross-section.

7. The method of one of the preceding claims, wherein the conveyor (4, 34) comprises an extruder screw which is arranged in the passage (5, 35).

8. The method of one of the preceding claims, wherein the passage (5, 35) contains a first passage portion (15, 45) containing the conveyor (4, 34), wherein the passage (5, 35) contains a second passage portion (20 , 50) which adjoins the first passage portion (15, 45), wherein the passage (5, 35) contains a third passage portion (25, 55) adjoining the second passage portion (20, 50), wherein the third passage portion (25, 55) contains the forming tool (8).

9. The method of claim 8, wherein the cooling device (9, 39) is arranged in the second passage portion (20, 50) such that the plastic melt in the second passage portion (20, 50) passes through the cooling device (9, 39).

10. The method of one of the preceding claims, in which the plastic material contains at least one element from the group consisting of polyethylene or polypropylene.

11. The method of claim 10, wherein the percentage of the polyethylene or the polypropylene is at least 50% by weight.

12. The method of one of the preceding claims, wherein the cooling device (9, 39) is arranged upstream of the forming tool (8).

## Revendications

1. Procédé de fabrication d'un tube (10) contenant une matière plastique, dans lequel la matière plastique est fondue dans une extrudeuse (3, 33) de manière à obtenir une matière plastique fondue, dans lequel l'extrudeuse (3, 33) comprend un passage (5, 35), dans lequel un convoyeur (4, 34) est agencé dans le passage (5, 35), dans lequel le passage (5, 35) a une première extrémité (6, 36), dans laquelle la matière plastique est introduite en aval de la première extrémité (6, 36) dans le passage (5, 35), dans lequel la matière plastique est transportée à travers le passage (5, 35) et est convertie en une matière plastique fondue, dans lequel le passage (5, 35) a une deuxième extrémité (7, 37), dans laquelle la matière plastique fondue est dirigée à travers le passage (5, 35) dans un outil de formage (8), dans lequel le tube (10) est produit au moyen de l'outil de formage (8), dans lequel le tube (10) quitte le passage (5, 35) à la deuxième extrémité (7, 37), dans lequel le passage (5, 35) dans l'outil de formage contient un mandrin, de sorte que la matière plastique fondue s'écoule du passage dans un passage annulaire agencé dans l'outil de formage, dans lequel le passage annulaire est agencé autour du mandrin, **caractérisé en ce que** la matière plastique fondue est guidée à travers un dispositif de refroidissement (9, 39), dans lequel le dispositif de refroidissement (9, 39) contient un élément de refroidissement (19, 49) et un élément de mélange (40, 41) qui est disposé à l'intérieur du passage (5, 35), dans lequel le dispositif de refroidissement est disposé en amont de l'outil de formage (8), la matière plastique fondue s'écoule autour de l'élément de refroidissement (19, 49) et de l'élément de mélange (40, 41), de sorte que la matière plastique fondue est refroidie par l'élément de refroidissement (19, 49 ) et la matière plastique fondue est mélangée par l'élément de mélange (40, 41), l'élément de refroidissement (19, 49) étant au moins partiellement disposé à l'intérieur de l'élément de mélange (40, 41) et dans lequel le tube a une épaisseur de paroi d'au moins 20 mm.

2. Procédé selon la revendication 1, dans lequel l'élément de mélange (40, 41) ou l'élément de refroidissement (19, 49) comprend une pluralité d'éléments ailettes qui peuvent être agencés transversalement les uns aux autres.

3. Procédé selon la revendication 2, dans lequel au moins une partie des éléments ailettes comprend un passage de refroidissement.

4. Procédé selon l'une des revendications précédentes, dans lequel le tube (10) a une épaisseur de paroi d'au moins 40 mm.

5. Procédé selon l'une des revendications précédentes, dans lequel le tube (10) a un diamètre extérieur d'au moins 100 mm, de préférence d'au moins 200 mm, plus préférentiellement d'au moins 400 mm.

6. Procédé selon l'une des revendications précédentes, dans lequel la température maximale de la matière plastique fondue diffère de la température minimale de la matière plastique fondue d'au plus 10 degrés, de préférence d'au plus 5 degrés, de sorte que la matière plastique fondue en aval du dispositif de refroidissement (9, 39) est homogénéisé sur la section d'écoulement.

7. Procédé selon l'une des revendications précédentes, dans lequel le convoyeur (4, 34) comprend une vis d'extrusion qui est agencée dans le passage (5, 35).

8. Procédé selon l'une des revendications précédentes, dans lequel le passage (5, 35) contient une première partie de passage (15, 45) contenant le convoyeur (4, 34), dans lequel le passage (5, 35) contient une deuxième partie de passage (20, 50) qui est contiguë à la première partie de passage (15, 45), dans lequel le passage (5, 35) contient une troisième partie de passage (25, 55) contiguë à la deuxième partie de passage (20, 50), dans lequel la troisième partie de passage (25, 55) contient l'outil de formage (8).

9. Procédé selon la revendication 8, dans lequel le dispositif de refroidissement (9, 39) est agencé dans la deuxième partie de passage (20, 50) de sorte que la matière plastique fondue dans la deuxième partie de passage (20, 50) traverse le dispositif de refroidissement (9, 39).

10. Procédé selon l'une des revendications précédentes, dans lequel la matière plastique contient au moins un élément du groupe constitué par le polyéthylène ou le polypropylène.

11. Procédé selon la revendication 10, dans lequel le pourcentage du polyéthylène ou du polypropylène est d'au moins 50 % en poids.

12. Procédé selon l'une des revendications précédentes, dans lequel le dispositif de refroidissement (9, 39) est agencé en amont de l'outil de formage (8).
